# FASCICULE DE BREVET EUROPEEN

(11) **EP 4 200 126 B1**
(45) Date de publication et mention de la délivrance du brevet: **13.08.2025**
(21) Numéro de dépôt: 21769491.8
(22) Date de dépôt: 16.08.2021
(51) Int. Cl.: B29D 30/06

(54) **MOULE DE CUISSON POUR PNEUMATIQUE COMPORTANT UN ÉLÉMENT D'ÉTANCHÉITÉ**
REIFENVULKANISIERFORM MIT EINEM DICHTELEMENT
TIRE CURING MOLD HAVING A SEALING ELEMENT

(30) Priorité: 19.08.2020 FR 2008561
(43) Date de publication de la demande: 28.06.2023
(73) Titulaire: COMPAGNIE GENERALE DES ETABLISSEMENTS MICHELIN, 63040 Clermont-Ferrand (FR)
(72) Inventeur: LESCUR, Thomas, 63040 Clermont-Ferrand CEDEX 9 (FR)
(74) Mandataire: M.F.P. Michelin
(86) Numéro de dépôt international: PCT/FR2021/051467
(87) Numéro de publication internationale: WO 2022/038327

(56) Documents cités:
- EP-A1- 0 522 374
- EP-A1- 3 115 167
- EP-A1- 3 590 695
- FR-A- 1 453 942
- FR-A1- 3 009 230
- JP-A- 2003 039 435
- US-A1- 2009 120 561
- US-A1- 2019 009 434

## Description

L'invention se situe dans le domaine de la fabrication des pneumatiques, et concerne plus particulièrement un moule de cuisson pour pneumatique du type à secteurs.

La fabrication d'un pneumatique comprend une étape de cuisson pendant laquelle une ébauche de pneumatique est vulcanisée et moulée en vue d'obtenir un pneumatique de caractéristiques mécaniques, de géométrie et d'aspect voulus. La cuisson s'effectue dans un moule de cuisson pour pneumatique comprenant des éléments de moulage. Les éléments de moulage forment ensemble une surface interne de moulage correspondant en négatif à la surface externe voulue du pneumatique.

Pendant l'étape de cuisson, l'ébauche de pneumatique est mise sous pression contre la surface interne du moule, et mise en température. Les conditions de température auxquelles la gomme de caoutchouc cru de l'ébauche est soumise provoquent une importante diminution de sa viscosité qui favorise, ensemble avec les conditions de pression, la formation de bavures de gomme entre les éléments de moulage. Afin d'éviter la formation de bavures, le jeu ou, autrement dit, l'espacement entre les éléments de moulage doit être inférieur à 0,03 mm.

De manière connue, les éléments de moulage d'un moule du type à secteurs comprennent des secteurs destinés à mouler la bande de roulement d'un pneumatique et deux coquilles destinées à mouler les flancs du pneumatique. Les secteurs sont agencés circonférentiellement de manière à former une couronne, et les deux coquilles sont agencées axialement de part et d'autre de la couronne à la manière de couvercles. Chaque élément de moulage est en contact avec plusieurs autres. Par ailleurs, le moule est soumis à des écarts de température importants qui tendent à dilater significativement les éléments de moulage. Dans ces conditions, la fermeture du moule avec un jeu entre les éléments de moulage inférieur à 0,03 mm est difficilement atteignable sans une réalisation très précise desdits éléments de moulage, ce qui s'avère couteux.

La demande EP0522374, au nom des demanderesses, propose un moule 10 du type à secteurs, illustré aux figures 1 et 2. Un secteur 11 comporte une garniture 12 qui contribue à la surface interne de moulage 13 du moule de cuisson, et un support 14 sur lequel la garniture est fixée. En outre, un secteur comprend deux segments de jonc 15 en acier agencés latéralement sur ledit support de telle manière que, en position de fermeture du moule, les segments de jonc sont situés aux deux interfaces de la garniture avec les coquilles 16. En position de fermeture du moule, les segments de jonc 15 sont en contact circonférentiel deux à deux, et une pression radiale vers l'intérieur du moule s'exerce sur eux, de telle manière que les segments de jonc 15 se compriment élastiquement jusqu'à ce que les garnitures 12 viennent à leur tour en contact circonférentiel deux à deux. Par conséquent, les garnitures 12 en aluminium se compriment élastiquement et/ou plastiquement également. La compression circonférentielle de l'ensemble formé par les segments de jonc 15 et les éléments de garniture 12 tend à réduire le diamètre dudit ensemble qui vient alors en contact radialement avec les coquilles. Ainsi, grâce à la déformation élastique et/ou plastique des segments de jonc et des garnitures, la fermeture du moule avec un jeu entre les éléments de moulage inférieur à 0,03 mm est possible.

Néanmoins, les segments de jonc sont des pièces de précision qui nécessitent une nuance d'acier de qualité présentant de bonnes propriétés élastiques. Leur agencement par rapport aux autres pièces du moule nécessite de nombreuses adaptations qui rendent la conception du moule complexe. Enfin, l'assemblage du moule requiert un ajustage précis. Le moule de cuisson ainsi réalisé, adapté et assemblé est, par conséquent, très couteux.

Par ailleurs, les segments sont coïncidents avec la surface interne de moulage. Autrement dit, lesdits segments comportent une surface de moulage qui participe à la surface interne de moulage du moule. Il est donc très contraignant, voire impossible, de réaliser ou d'insérer des gravures sur la partie de la surface interne de moulage formée par les segments de jonc, lesdites gravures étant destinées à former des marquages sur l'épaule du pneumatique.

Le document JP2003039435 décrit, comme le document précédent, une solution pour un segment de jonc comportant un insert qui participe à la surface interne de moulage du moule.

Un objectif de l'invention est de remédier aux inconvénients de l'état de la technique et d'apporter une solution permettant d'éviter la formation de bavures de gomme.

A cette fin, l'invention a pour premier objet un moule de cuisson pour pneumatique comprenant deux coquilles destinées chacune à mouler un flanc du pneumatique, une couronne de secteurs destinés à mouler une bande de roulement du pneumatique, chaque secteur comportant une garniture et deux segments en arc de cercle, **caractérisé en ce que** chaque segment est agencé de sorte à combler un jeu subsistant à une interface entre la garniture et une coquille, et de sorte à ne pas être coïncident avec une surface de moulage du moule de cuisson.

Ainsi, le jeu subsistant à une interface entre la garniture et une coquille est comblé par le segment ou, autrement dit, ledit jeu est nul ou inférieur à 0,03 mm. La formation de bavures de gomme est ainsi évitée. Par ailleurs, le segment n'étant pas coïncident avec la surface de moulage, il est facile de réaliser ou d'insérer des gravures destinées à former des marquages sur l'épaule du pneumatique.

Avantageusement, ledit segment est logé dans une gorge creusée sur ladite surface de contact. Une telle conception est simple et peu coûteuse par rapport à la conception de l'état de la technique.

De préférence, en position de fermeture du moule,
- la garniture est en contact avec une coquille uniquement via ledit segment,
- les secteurs sont en contact circonférentiel deux à deux via lesdites garnitures.

Autrement dit, en position de fermeture du moule, le segment est en contact radial avec une coquille, et une pression radiale s'exerce sur ledit segment de telle manière que le segment se comprime élastiquement et/ou plastiquement jusqu'à ce que la garniture vienne en contact circonférentiel avec les garnitures adjacentes. Ainsi, grâce à la déformation élastique et/ou plastique des segments, le moule est fermé avec un jeu entre les éléments de moulage nul ou inférieur à 0,03 mm.

Selon une variante de réalisation, en position de fermeture du moule,
- la garniture est en contact avec une coquille via ledit segment et via la surface de contact de la garniture à l'interface entre la garniture et une coquille,
- les secteurs sont en contact circonférentiel deux à deux via lesdites garnitures.

Ainsi, en position de fermeture du moule, le segment est en contact radial avec une coquille, et une pression radiale s'exerce sur ledit segment de telle manière que le segment se comprime élastiquement et/ou plastiquement jusqu'à ce que la garniture vienne en contact circonférentiel avec les garnitures adjacentes, et jusqu'à ce que la garniture vienne en contact avec une coquille par ladite surface par ladite surface de contact. Ainsi, grâce à la déformation élastique et/ou plastique des segments, le moule est fermé avec un jeu entre les éléments de moulage nul ou inférieur à 0,03 mm.

De préférence, ledit segment est distant de ladite surface de moulage et, plus préférentiellement, distant de 0,1 mm à 10 mm de ladite surface de moulage. Ainsi, la surface de moulage de la garniture n'est pas fragilisée par une trop grande proximité de la gorge et du segment. Par ailleurs, en se comprimant radialement, le segment s'élargit axialement et peut venir affleurer sur ou dépasser la surface de moulage. Une distance suffisante est alors nécessaire entre ladite surface de moulage et le segment. A l'inverse, une distance excessive associée à une compression radiale insuffisante du segment en position de fermeture du moule, augmente le risque de formation de bavure. Il est donc nécessaire de limiter ladite distance. En conclusion, une telle conception permet d'améliorer la qualité de moulage d'un pneumatique.

Avantageusement, le matériau de la garniture présente un pression de contact admissible, dite de matage, supérieure ou égale à 350 Mpa et, de préférence, supérieure à 400 Mpa. Ainsi, les surfaces de contact entre les garnitures ont une bonne résistance à l'usure et au matage. La durée de vie du moule est ainsi améliorée. De préférence, le matériau d'une garniture est choisi dans un groupe de matériaux comprenant les alliages ferreux tel que l'acier.

De préférence, la garniture est obtenue par un procédé de consolidation par fusion sélective.

Avantageusement, le matériau dudit segment présente un pression de contact admissible, dite de matage, inférieure à 350 Mpa et, de préférence, inférieure à 300 Mpa. Ainsi, le segment peut se déformer localement plus facilement, voire s'écraser, de manière à permettre un contact étanche entre la coquille et la garniture. De préférence, le matériau d'un segment est choisi dans un groupe de matériau comprenant les alliages d'aluminium.

L'invention a pour deuxième objet un procédé de fabrication d'un pneumatique comprenant une étape de cuisson d'un pneumatique dans un moule selon le premier objet de l'invention.

L'invention sera mieux comprise grâce à la suite de la description, qui s'appuie sur les figures suivantes :
- la figure 1, déjà décrite, est une vue en coupe radiale d'un moule de cuisson selon l'état de la technique ;
- la figure 2, déjà décrite, est une vue en coupe axiale du moule de la figure 1 ;
- la figure 3 est une vue en coupe radiale de certains éléments d'un moule de cuisson selon l'invention ;
- la figure 4 est une vue en coupe axiale de certains éléments du moule de la figure 3 en position intermédiaire dudit moule entre une position d'ouverture et de fermeture ;
- la figure 5 est une vue en coupe axiale de certains éléments du moule de la figure 3 en position de fermeture dudit moule.

Sur les différentes figures, les éléments identiques ou similaires portent la même référence. Leur description n'est donc pas systématiquement reprise.

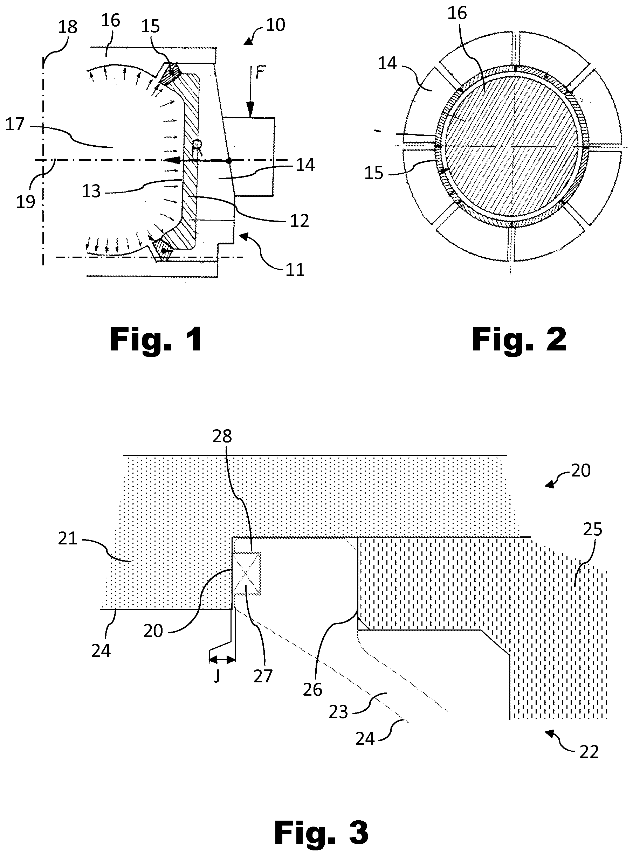

Les figures 1 et 2 illustrent de manière schématique un moule de cuisson 10 pour pneumatique connu de l'état de la technique. Le moule délimite une cavité 17 généralement symétrique par révolution d'axe central 18.

Dans toute la suite et sauf indication contraire, une direction axiale désigne une direction parallèle à l'axe central 18, une direction radiale 19 désigne une direction perpendiculaire à l'axe central 18 et qui l'intercepte, et une direction circonférentielle désigne une direction perpendiculaire à une direction radiale 19 et à l'axe central 18.

La figure 3 est une vue partielle en coupe radiale d'un moule de cuisson 20 pour pneumatique selon l'invention, en position de fermeture. Le moule de cuisson comprend deux coquilles 21 destinées chacune à mouler un flanc du pneumatique, une couronne de secteurs 22 destinés à mouler une bande de roulement du pneumatique. Chaque secteur 22 comporte une garniture 23 formant, ensemble avec les coquilles, une surface interne de moulage 24, et un support 25. La garniture 23 d'un secteur 22 est monobloc ou, peut également être composée de plusieurs éléments de garniture. La garniture 23 est agencée et solidarisée par tout moyen adapté sur la face radialement interne 26 du support 25. La face radialement interne 26 du support prend généralement la forme d'un cylindre s'étendant axialement. A titre d'exemple, ladite face peut également prendre une forme tronconique. Les secteurs 22 sont en contact circonférentiel deux à deux par leurs faces latérales, et les secteurs 22 et les coquilles 21 sont espacés d'un jeu J.

Selon un mode de réalisation de l'invention, le moule 20 comprend deux segments 27 en arc de cercle. Chaque segment 27 est agencé de sorte à combler le jeu J subsistant à une interface entre la garniture 23 et une coquille 21, et de sorte à ne pas être coïncident avec la surface de moulage 24 du moule de cuisson. L'ensemble des segments 27 situés, par exemple, à l'interface supérieure entre une coquille 21 et les secteurs 22, forment un anneau de faible section comparativement aux sections des éléments adjacents. A titre d'exemple, la face radialement interne de la coquille 21, sur laquelle les segments 27 viennent en appui, prend généralement la forme d'un cylindre s'étendant axialement.

Un segment 27 est logé dans une gorge 28 creusée sur une surface de contact de la garniture à l'interface entre la garniture et une coquille. Le segment a une section rectangulaire (figure 3) mais peut, par exemple, avoir une section circulaire ou triangulaire. La section de la gorge est complémentaire de celle du segment de manière à permettre une bonne répartition des pressions de contact, et/ou sensiblement plus étendue axialement que celle du segment afin de permettre son insertion dans la gorge et son écrasement lorsque le segment est comprimé radialement.

Le segment 27 est distant de la surface de moulage 24 de la garniture 23 et, plus préférentiellement, distant de 0,1 mm à 10 mm de ladite surface de moulage. Ainsi, ladite surface de moulage n'est pas fragilisée par une trop grande proximité de la gorge 28 et du segment 27. Par ailleurs, en se comprimant radialement, le segment 27 s'élargit axialement et peut venir affleurer sur ou dépasser la surface de moulage 24. Une distance minimale est alors nécessaire entre ladite surface de moulage et le segment. A l'inverse, une distance excessive associée à une compression radiale insuffisante du segment augmente, en position de fermeture du moule, le risque de formation de bavure. Il est donc nécessaire de limiter ladite distance.

Le matériau de la garniture 23 présente une pression de contact admissible, dite de matage, supérieure ou égale à 350 Mpa et, de préférence, supérieure à 400 Mpa. Ainsi, les faces latérales des garnitures 23 ont une bonne résistance à l'usure et au matage. Le matériau de la garniture 23 est choisi dans un groupe de matériaux comprenant les alliages ferreux. A titre d'exemple, la garniture est réalisée en acier et, plus particulièrement, dans un acier adapté à un procédé de fabrication de consolidation par fusion sélective.

Le matériau du segment 27 présente une pression de contact admissible, dite de matage, inférieure à 350 Mpa et, de préférence, inférieure à 300 Mpa. Ainsi, le segment peut plus facilement se déformer localement, voire s'écraser, de manière à permettre un contact étanche entre la coquille 21 et la garniture 23. Le matériau d'un segment 27 est choisi dans un groupe de matériau comprenant les alliages d'aluminium.

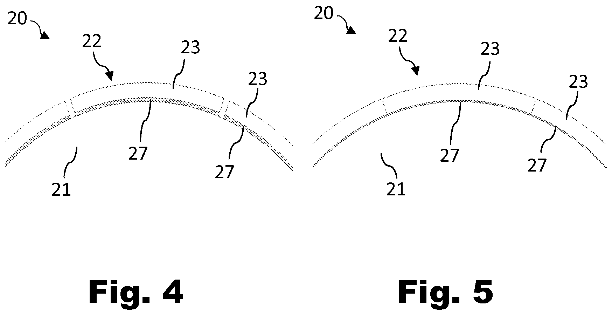

La figure 4 illustre le moule 20 en position intermédiaire entre une position d'ouverture et une position de fermeture. Les secteurs 22 sont en appui radial sur une coquille 21 via la garniture 23 et jamais via le support 24, la garniture 23 étant elle-même en appui radial sur la coquille 21 via le segment 27. Les secteurs 22 sont proches circonférentiellement mais ne sont pas encore en contact.

La figure 5 illustre le moule 20 en position de fermeture complète. Autrement dit, les moyens de fermeture du moule exercent sur les secteurs 22 une pression radiale de serrage de l'extérieur vers l'intérieur du moule, de telle sorte que les segments 27 se compriment radialement élastiquement ou/et plastiquement jusqu'à ce que les secteurs 22 viennent en contact circonférentiel deux à deux par leur garniture 23.

Selon une première variante de réalisation, en position de fermeture du moule,
- la garniture 23 est en contact avec une coquille 21 uniquement via ledit segment 27,
- les secteurs 22 sont en contact circonférentiel deux à deux via lesdites garnitures 23.

Selon une deuxième variante de réalisation, en position de fermeture du moule,
- la garniture 23 est en contact avec une coquille 21 via ledit segment 27 et via la surface de contact de la garniture à l'interface entre la garniture et une coquille,
- les secteurs sont en contact circonférentiel deux à deux via lesdites garnitures.

La garniture est obtenue par un procédé de consolidation par fusion sélective. Par « consolidation sélective par fusion », on entend un procédé de fabrication additive visant à agréger ou agglomérer progressivement et sélectivement, une amenée de matière d'œuvre entrante de manière à obtenir une matière d'œuvre sortante. La matière d'œuvre entrante prend la forme et/ou rentre dans la composition d'une poudre, d'un fil ou d'une solution/bain. La matière d'œuvre entrante est généralement amenée par dépôt d'une poudre sur un support de manière à former une couche. Le support prend la forme d'un plateau ou d'une couche précédemment agglomérée. L'agglomération est généralement obtenue par solidification de la matière d'œuvre entrante qui est entrée en fusion totale ou partielle (frittage) par un apport localisé ou généralisé d'énergie, puis refroidie. L'apport d'énergie est généralement réalisé par un laser ou par un faisceau d'électrons, bien qu'il puisse être réalisé par induction ou rayonnement infrarouge. Dans le cas du laser et du faisceau d'électrons, la localisation de l'apport d'énergie est obtenue par des moyens d'orientation de l'apport d'énergie comme, respectivement, des moyens optiques ou électromagnétiques. Le procédé confère à la matière d'œuvre entrante une forme et des caractéristiques mécaniques prédéterminées. Ladite forme et lesdites caractéristiques sont fonctions du matériau de la matière d'œuvre entrante et de paramètres du procédé. Ladite forme est généralement un solide monobloc, bien qu'elle puisse être constituée de plusieurs solides monoblocs.

## Revendications

1. Moule de cuisson (20) pour pneumatique comprenant deux coquilles (21) destinées chacune à mouler un flanc du pneumatique, une couronne de secteurs (22) destinés à mouler une bande de roulement du pneumatique, chaque secteur (22) comportant une garniture (23) et deux segments (27) en arc de cercle,
**caractérisé en ce que** chaque segment (27) est agencé de sorte à combler un jeu subsistant à une interface entre la garniture (23) et une coquille (21), et de sorte à ne pas être coïncident avec une surface de moulage (24) du moule de cuisson.

2. Moule selon la revendication précédente dans lequel ledit segment (27) est logé dans une gorge (28) creusée sur une surface de contact de la garniture à l'interface entre la garniture et une coquille.

3. Moule selon la revendication 1 ou 2 dans lequel, en position de fermeture du moule,
- la garniture (23) est en contact avec une coquille (21) uniquement via ledit segment (23),
- les secteurs (22) sont en contact circonférentiel deux à deux via lesdites garnitures (23).

4. Moule selon la revendication 1 ou 2 dans lequel, en position de fermeture du moule,
- la garniture (23) est en contact avec une coquille (21) via ledit segment (27) et via la surface de contact de la garniture à l'interface entre la garniture et une coquille,
- les secteurs (22) sont en contact circonférentiel deux à deux via lesdites garnitures (23).

5. Moule selon l'une des revendications précédentes dans lequel ledit segment (27) est distant de ladite surface de moulage (24) et, plus préférentiellement, distant de 0,1 mm à 10 mm de ladite surface de moulage.

6. Moule selon l'une des revendications précédentes dans lequel le matériau de la garniture (23) présente une pression de contact admissible, dite de matage, supérieure ou égale à 350 Mpa et, de préférence, supérieure à 400 Mpa.

7. Moule selon l'une des revendications précédentes dans lequel le matériau d'une garniture (23) est choisi dans un groupe de matériaux comprenant les alliages ferreux.

8. Moule selon l'une des revendications précédentes dans lequel la garniture (23) est obtenue par un procédé de consolidation par fusion sélective.

9. Moule selon l'une des revendications précédentes dans lequel le matériau d'un segment (27) présente une pression de contact admissible, dite de matage, inférieure à 350 Mpa et, de préférence, inférieure à 300 Mpa.

10. Moule selon l'une des revendications précédentes dans lequel le matériau d'un segment (27) est choisi dans un groupe de matériau comprenant les alliages d'aluminium.

11. Procédé de fabrication d'un pneumatique comprenant une étape de cuisson d'un pneumatique dans un moule (20) selon l'une des revendications 1 à 10.

## Patentansprüche

1. Vulkanisationsform (20) für einen Reifen, die zwei Schalen (21) beinhaltet, die jeweils zum Formen einer Seitenwand des Reifens bestimmt sind, einen Kranz aus Sektoren (22), die zum Formen eines Laufstreifens des Reifens bestimmt sind, wobei jeder Sektor (22) einen Belag (23) und zwei kreisbogenförmige Segmente (27) umfasst,
**dadurch gekennzeichnet, dass** jedes Segment (27) so angeordnet ist, dass es ein an einer Grenzfläche zwischen dem Belag (23) und einer Schale (21) verbleibendes Spiel füllt, und so, dass es nicht mit einer Formungsfläche (24) der Vulkanisationsform zusammenfällt.

2. Form nach dem vorhergehenden Anspruch, wobei das Segment (27) in einer Nut (28) aufgenommen ist, die auf einer Kontaktfläche des Belags an der Grenzfläche zwischen dem Belag und einer Schale ausgebildet ist.

3. Form nach Anspruch 1 oder 2, wobei, in der Schließstellung der Form,
- der Belag (23) mit einer Schale (21) nur über das Segment (23) in Kontakt ist,
- die Sektoren (22) über die Beläge (23) paarweise in umfänglichem Kontakt sind.

4. Form nach Anspruch 1 oder 2, wobei, in der Schließstellung der Form,
- der Belag (23) mit einer Schale (21) über das Segment (27) und über die Kontaktfläche des Belags an der Grenzfläche zwischen dem Belag und einer Schale in Kontakt ist,
- die Sektoren (22) über die Beläge (23) paarweise in umfänglichem Kontakt sind.

5. Form nach einem der vorhergehenden Ansprüche, wobei das Segment (27) von der Formungsfläche (24) entfernt ist und noch bevorzugter um 0,1 mm bis 10 mm von der Formungsfläche entfernt ist.

6. Form nach einem der vorhergehenden Ansprüche, wobei das Material des Belags (23) einen zulässigen Kontaktdruck, Verstemmdruck genannt, von 350 Mpa oder mehr und bevorzugt von mehr als 400 Mpa aufweist.

7. Form nach einem der vorhergehenden Ansprüche, wobei das Material eines Belags (23) aus einer Gruppe von Materialien gewählt ist, welche die Eisenlegierungen umfasst.

8. Form nach einem der vorhergehenden Ansprüche, wobei der Belag (23) durch ein Verfahren zur Verfestigung durch selektives Schmelzen erhalten wird.

9. Form nach einem der vorhergehenden Ansprüche, wobei das Material eines Segments (27) einen zulässigen Kontaktdruck, Verstemmdruck genannt, von weniger als 350 Mpa und bevorzugt weniger als 300 Mpa aufweist.

10. Form nach einem der vorhergehenden Ansprüche, wobei das Material eines Segments (27) aus einer Materialgruppe gewählt ist, welche die Aluminiumlegierungen umfasst.

11. Verfahren zur Herstellung eines Reifens, umfassend einen Schritt des Vulkanisierens eines Reifens in einer Form (20) nach einem der Ansprüche 1 bis 10.

## Claims

1. Tyre curing mould (20) comprising two shells (21) that are each intended to mould a sidewall of the tyre and a ring of sectors (22) that are intended to mould a tread of the tyre, each sector (22) having a lining (23) and two arc-shaped segments (27),
**characterized in that** each segment (27) is arranged so as to fill a clearance at an interface between the lining (23) and a shell (21), and so as to not be coincident with a moulding surface (24) of the curing mould.

2. Mould according to the preceding claim, wherein said segment (27) is housed in a recessed groove (28) on a contact surface of the lining at the interface between the lining and a shell.

3. Mould according to Claim 1 or 2, wherein, in a closed position of the mould,
- the lining (23) is in contact with a shell (21) only via said segment (23),
- the sectors (22) are in circumferential contact in a pairwise manner via said linings (23).

4. Mould according to Claim 1 or 2, wherein, in the closed position of the mould,
- the lining (23) is in contact with a shell (21) via said segment (27) and via the contact surface of the lining at the interface between the lining and a shell,
- the sectors (22) are in circumferential contact in a pairwise manner via said linings (23).

5. Mould according to one of the preceding claims, wherein said segment (27) is spaced apart from said moulding surface (24) and, more preferably, spaced apart from said moulding surface by 0.1 mm to 10 mm.

6. Mould according to one of the preceding claims, wherein the material of the lining (23) has an admissible contact pressure, referred to as brinelling pressure, greater than or equal to 350 MPa and, preferably, greater than 400 MPa.

7. Mould according to one of the preceding claims, wherein the material of a lining (23) is selected from a group of materials comprising ferrous alloys.

8. Mould according to one of the preceding claims, wherein the lining (23) is obtained by way of a process of consolidation by selective melting.

9. Mould according to one of the preceding claims, wherein the material of a segment (27) has an admissible contact pressure, referred to as brinelling pressure, lower than 350 MPa and, preferably, lower than 300 MPa.

10. Mould according to one of the preceding claims, wherein the material of a segment (27) is selected from a group of materials comprising aluminium alloys.

11. Method for manufacturing a tyre, comprising a step of curing a tyre in a mould (20) according to one of Claims 1 to 10.
